# FASCICULE DE BREVET EUROPEEN

(11) **EP 2 077 382 B1**
(45) Date de publication et mention de la délivrance du brevet: **09.03.2011**
(21) Numéro de dépôt: 08020502.4
(22) Date de dépôt: 26.11.2008
(51) Int. Cl.: F02D 41/00, F02D 41/06, F02N 19/04

(54) **Procédé pour démarrer à froid un moteur à combustion interne, notamment à autoallumage, et moteur utilisant un tel procédé**
Verfahren für den Kaltstart eines Verbrennungsmotors, insbesondere eines selbstzündenden Verbrennungsmotors, und Motor, welcher dieses Verfahren verwendet
Process for cold starting an internal combustion engine, in particular a self ignition engine, and engine using this process

(30) Priorité: 10.12.2007 FR 0708639
(43) Date de publication de la demande: 08.07.2009
(73) Titulaire: IFP Energies Nouvelles, 92852 Rueil-Malmaison Cedex (FR)
(72) Inventeur: Venturi, Stéphane, 07100 Roiffieux (FR); Colliou, Thierry, 38138 Les Cotes D'Arey (FR)

(56) Documents cités:
- EP-A- 0 156 664
- WO-A-92/18761
- DE-A1- 3 401 362
- DE-A1- 4 445 779

## Description

La présente invention se rapporte à un procédé pour démarrer un moteur à combustion interne, notamment à autoallumage et en particulier de type Diesel, et un moteur utilisant un tel procédé.
Elle concerne plus particulièrement le démarrage de tels moteurs avec de faibles taux de compression ou rencontrant des difficultés de démarrage dans des conditions à froid.

Généralement, ce type de moteur est mis en fonctionnement grâce à un dispositif de démarrage, tel qu'un démarreur électrique, qui entraîne en rotation le vilebrequin que comporte ce moteur. La rotation de ce vilebrequin permet, par l'intermédiaire d'une bielle reliée à un maneton de ce vilebrequin, de générer un mouvement rectiligne alternatif pour un piston coulissant dans un cylindre de ce moteur.
Ces différents mouvements rectilignes permettent d'introduire de l'air extérieur dans la chambre de combustion pendant le mouvement descendant de ce piston (phase admission), puis de comprimer dans la chambre de combustion l'air introduit lors d'un mouvement ascendant de ce piston (phase de compression). Vers la fin du mouvement ascendant de ce piston, du carburant est injecté dans l'air comprimé de manière à produire une combustion par autoallumage du mélange carburé ainsi créé. Cette combustion génère une augmentation de pression dans la chambre de combustion entraînant un mouvement descendant du piston (phase de détente). Ce mouvement se poursuit par une phase d'échappement des gaz brûlés lors du mouvement ascendant de ce piston.

Il est notablement reconnu que de tels dispositifs de démarrage ne sont pas suffisants pour permettre le démarrage de ces moteurs par temps de grands froids, spécialement lorsque la température de l'air est inférieure à 0°C.
En effet, pendant la phase d'admission, l'air introduit est à très basse température et, lors de la phase de compression, cet air comprimé n'atteint pas un niveau suffisant de modifications de ses caractéristiques physicochimiques, notamment au niveau de l'augmentation de sa température, pour déclencher la réaction chimique avec le carburant injecté et nécessaire pour débuter la combustion du mélange carburé.

Pour tenter de remédier à ce problème, il est prévu de préchauffer par des bougies, dite de préchauffage, situées dans le cylindre ou dans le circuit d'admission, l'air admis dans la chambre de combustion. Ces bougies permettent de créer des points chauds dans cette chambre de combustion en permettant ainsi d'initier la combustion du mélange carburé.
Outre le fait que ces bougies de préchauffage entraînent une augmentation du coût de réalisation du moteur (au moins une bougie de préchauffage par cylindre est nécessaire dans le cas où elles sont localisées dans le cylindre), elles réclament une conception plus complexe de la culasse pour pouvoir les loger.
De plus, ces bougies sont consommatrices de puissance électrique qui, ajoutée à celle nécessaire au démarreur électrique, demande une batterie de forte puissance qui participe également à l'augmentation du coût du véhicule.
En outre, juste après un démarrage à froid, la température du moteur n'est pas suffisamment élevée pour la tenue au ralenti. Ceci a pour inconvénient d'entraîner des perturbations dans la combustion du mélange carburé qui peuvent aboutir au calage du moteur ou occasionner des vibrations ou des bruits néfastes au confort de conduite. Il est ainsi parfois nécessaire, après le démarrage du moteur, de maintenir en action le dispositif de préchauffage qui, dans ce cas, est utilisé en tant que dispositif de post chauffage.

La présente invention se propose de remédier aux inconvénients ci-dessus mentionnés grâce à un procédé et à un moteur qui ne nécessitent pas l'utilisation de bougies de préchauffage tout en assurant un démarrage rapide du moteur.

A cet effet, la présente invention concerne un procédé pour démarrer un moteur à combustion interne fonctionnant selon un cycle avec une phase d'admission, de compression, de détente et d'échappement, et comportant au moins deux cylindres avec une chambre de combustion, des moyens d'admission d'air, des moyens d'échappement et des moyens d'injection de carburant dans ladite chambre, caractérisé en ce qu'il consiste :
- à réaliser au moins un cycle de fonctionnement du moteur sous l'impulsion d'un dispositif de démarrage tout en interdisant l'introduction de carburant dans tous les cylindres et en rendant inactifs les moyens d'échappement,
- à comprimer et à chauffer de l'air par l'intermédiaire desdits cylindres pendant ledit au moins un cycle de fonctionnement du moteur,
- à entreposer cet air comprimé chaud dans des moyens de stockage extérieurs aux cylindres,
- à admettre cet air comprimé chaud dans au moins un desdits cylindres et à y introduire du carburant en réalisant un mélange air comprimé chaud/carburant de façon à effectuer un début de démarrage du moteur par la combustion dudit mélange carburé.

Le procédé peut consister, après le début de démarrage du moteur, à arrêter le dispositif de démarrage et à admettre de l'air ainsi que du carburant dans ledit au moins un desdits cylindres pour réaliser un mélange air/carburant et la combustion de ce mélange dans ledit cylindre.

Le procédé peut consister, pendant qu'au moins un desdits cylindres admet de l'air comprimé chaud, à poursuivre la compression et le chauffage de l'air par l'intermédiaire d'au moins un autre desdits cylindres ainsi que le stockage de l'air comprimé chaud.

Le procédé peut consister, pendant qu'au moins un desdits cylindres admet de l'air après le début de démarrage, à poursuivre la compression et le chauffage de l'air par l'intermédiaire d'au moins un autre desdits cylindres ainsi que le stockage de l'air comprimé chaud.

Le procédé peut consister, pendant qu'au moins un desdits cylindres admet de l'air après le début de démarrage, à admettre de l'air comprimé chaud dans au moins un autre desdits cylindres et à y autoriser l'introduction du carburant pour réaliser un mélange carburé.

Le procédé peut consister, pour réaliser la compression et le chauffage de l'air, à admettre cet air pendant la phase d'admission et de détente d'au moins un desdits cylindres, et à comprimer et chauffer cet air lors de sa phase de compression et d'échappement.

Le procédé peut consister, pour réaliser la compression et le chauffage de l'air, à admettre cet air pendant la phase d'admission d'au moins un desdits cylindres, et à comprimer et chauffer cet air lors de sa phase de compression.

Le procédé peut consister, pour réaliser la compression et le chauffage de l'air, à admettre cet air pendant la phase d'admission d'au moins un desdits cylindres, et à comprimer et chauffer cet air lors de sa phase d'échappement.

Le procédé peut consister, pendant qu'au moins un desdits cylindres admet de l'air comprimé chaud, à admettre de l'air dans ce cylindre pour obtenir un mélange d'air et d'air chaud comprimé dans lequel est introduit du carburant.

L'invention concerne également un moteur à combustion interne comportant au moins deux cylindres comprenant une chambre de combustion avec au moins un moyen d'admission d'air et des moyens d'injection de carburant, caractérisé en ce qu'il comprend des moyens de stockage extérieurs aux cylindres de l'air comprimé par l'un au moins des cylindres. Contrairement, DE 4 445 779 décrit des moyens de stockage intérieurs aux cylindres.

Dans le cas ou le moteur à combustion interne comprend au moins deux moyens d'admission avec chacun une tubulure d'admission contrôlée par une soupape d'admission, ce moteur peut comprendre un premier collecteur d'admission en communication avec les cylindres par l'un des moyens d'admission en étant connecté à une entrée d'air et un deuxième collecteur d'admission en communication avec les cylindres par l'autre des deux moyens d'admission en étant connecté par une autre entrée d'air contrôlée par un moyen de vannage.

Les moyens de stockage peuvent comprendre le deuxième collecteur d'admission dont l'entrée d'air est fermée par le moyen de vannage.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un moteur à combustion interne utilisant le procédé selon l'invention et
- les figures 2 à 7 qui montrent des courbes pour les différentes possibilités de lois de levée des soupapes d'admission et d'échappement du moteur utilisant le procédé selon l'invention.

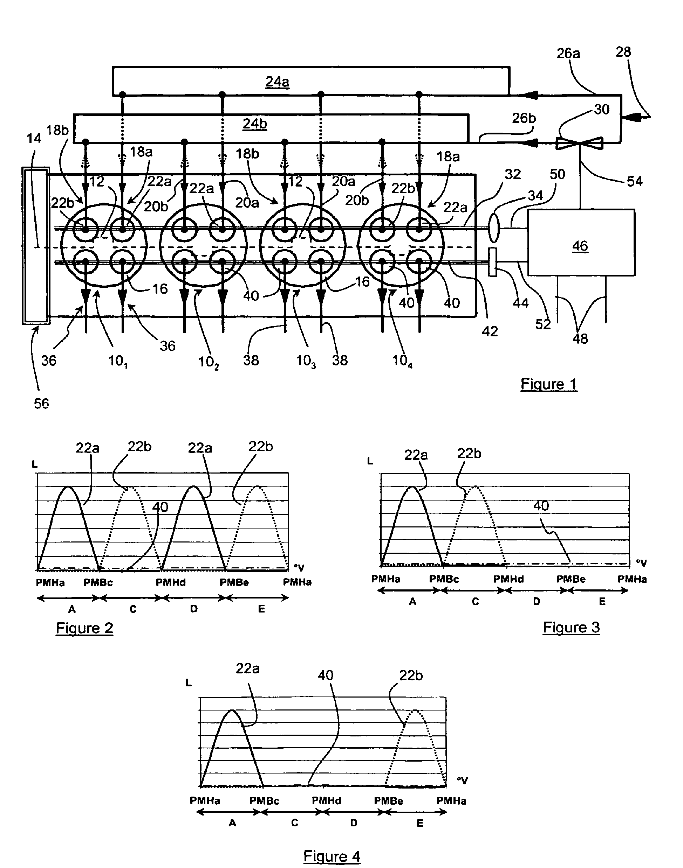

Sur la figure 1, le moteur à combustion interne illustré est un moteur à autoallumage en particulier de type Diesel. Ce moteur fonctionne classiquement selon un cycle de fonctionnement à quatre temps comprenant une phase d'admission A, de compression C, de détente D et d'échappement E.
Ce moteur comprend au moins deux cylindres, ici quatre cylindres10₁, 10_{2,} 10₃ et 10₄, à l'intérieur desquels coulisse un piston (non représenté) en un mouvement rectiligne sous l'impulsion d'une bielle (non représentée) connectée à un maneton 12 d'un vilebrequin 14. Une chambre de combustion 16 est ainsi délimitée, dans chaque cylindre, par le piston, la paroi périphérique du cylindre et la face de la culasse (non représentée) en vis-à-vis du piston.

Comme cela est largement connu, c'est dans la chambre de combustion que se produit habituellement la combustion par autoallumage d'un mélange carburé. Ce mélange carburé peut être, soit un mélange d'air extérieur ou d'air suralimenté avec un carburant introduit dans la chambre de combustion 16 par des moyens d'injection, tel qu'un injecteur (non représentés sur la figure 1), soit un mélange d'air extérieur (ou d'air suralimenté) additionné à des gaz d'échappement recirculés (EGR) avec un carburant.

Chaque cylindre comporte au moins un premier et un deuxième moyen d'admission 18a, 18b comprenant chacun une tubulure d'admission 20a, 20b et un moyen d'obturation, comme une soupape d'admission 22a, 22b. Les premières tubulures d'admission 20a du premier moyen d'admission aboutissent à un premier collecteur d'admission 24a alors que les deuxièmes tubulures d'admission 20b de l'autre 18b des moyens d'admission sont connectées à un deuxième collecteur d'admission 24b.

Chaque collecteur comprend également une arrivée d'air extérieur 26a, 26b aboutissant à une conduite commune d'alimentation en air extérieur 28.
L'une des arrivées d'air, ici l'arrivée 26b, porte un moyen de vannage, comme une vanne pilotée 30 de type 2 voies. Cette vanne permet de contrôler la circulation de l'air dans cette arrivée d'air entre une position extrême de fermeture où elle isole le collecteur d'admission 24b de l'alimentation 28 et une position extrême d'ouverture où l'air circule librement entre l'alimentation 28 et le collecteur 24b.

Les soupapes d'admission 22a et 22b sont commandées chacune en ouverture et en fermeture par tous moyens connus permettant de faire varier les lois de levée de ces soupapes, notamment au niveau de leurs moments d'ouverture et de fermeture, de manière indépendante les unes des autres ou de manière conjointe.
A titre d'exemple, ces moyens de commande peuvent comprendre un arbre à cames de type VVA (Variable Valve Actuation) commandant les premières soupapes d'admission 22a et un autre arbre à cames, également de type VVA, commandant les deuxièmes soupapes d'admission 22b. Bien entendu, ces deux arbres à cames sont associés, dans l'exemple illustré, pour ne faire qu'un seul arbre à cames 32 portant une multiplicité de cames avec des profils multiples permettant de commander chaque soupape d'admission 22a et 22b selon des lois de levée différentes, sous l'impulsion de moyens de contrôle 34, comme cela sera mieux explicité dans la suite de la description.

Cet arbre à cames de type VVA peut être remplacé par des moyens d'actionnement dédiés à chaque soupape, comme un actionneur à commande électromagnétique ou hydraulique ou électrohydraulique ou pneumatique ou électropneumatique, qui agit directement ou indirectement sur la tige de soupape. Ceci permet de changer tout aussi bien les durées d'ouverture des soupapes que leurs levées ou leurs fréquences d'ouverture avec la possibilité de réaliser des multi ouvertures dans le même cycle de fonctionnement de ce moteur.

Il est à noter que le terme "levée" correspond à la représentation graphique (selon deux axes) du mouvement d'une soupape à partir du début de son ouverture jusqu'à la fin de sa fermeture en passant par sa position de pleine ouverture.

Ce cylindre comporte également au moins un moyen d'échappement 36, ici deux, qui comprend une tubulure d'échappement 38 associée à une soupape d'échappement 40.
Les soupapes d'échappement sont également commandées en ouverture et fermeture par tous moyens permettant de faire varier les lois de levée de ces soupapes, notamment au niveau de l'étendue de leurs levées ou de leurs moments d'ouverture/fermeture, comme ceux connus sous le vocable d'arbre à cames 42 de type VVA (Variable Valve Actuation), et pilotés par des moyens de contrôle 44.

Bien entendu, comme pour la commande des soupapes d'admission, les moyens de commande des soupapes d'échappement peuvent être remplacés par un moyen d'actionnement dédié à chaque soupape, comme un actionneur à commande électromagnétique ou hydraulique ou électrohydraulique ou pneumatique ou électropneumatique, qui agit directement ou indirectement sur la tige de soupape.

De manière habituelle, il est prévu une unité de calcul 46, dite calculateur-moteur, qui permet de contrôler le fonctionnement de ce moteur.
Ce calculateur contient des cartographies ou des tables de données permettant d'évaluer, en fonction des valeurs des paramètres du moteur transmises par des lignes de données 48, comme la température de l'air d'admission, de gérer les conditions selon lesquelles se déroule le fonctionnement du moteur.
Plus précisément, ce calculateur-moteur permet, en fonction de ces conditions souhaitées de fonctionnement, de piloter les moyens d'injection de carburant, de contrôler les lois de levée des soupapes d'admission 22a, 22b par une ligne de commande 50 agissant sur les moyens de contrôle 34 ainsi que les lois de levée des soupapes d'échappement 40 par une ligne de commande 52 agissant sur les moyens de contrôle 44, et de commander la vanne pilotée 30 par une ligne 54.

Comme cela est habituel, ce moteur porte un dispositif de démarrage 56 du moteur, comme un démarreur électrique, qui est relié fixement à l'axe du vilebrequin 14 pour entraîner ce dernier en rotation. Cette rotation permet de générer un mouvement rectiligne alternatif des pistons dans les cylindres.

Lorsque la séquence de démarrage du moteur est débutée par la mise du contact par le conducteur, le calculateur 46 peut recevoir des informations par les lignes 48 selon lesquelles le moteur est en configuration de démarrage à froid.

Dans cette configuration et en fonction des cartographies qu'il contient, le calculateur commande, pendant au moins un cycle de fonctionnement du moteur, le démarreur 56, les moyens d'injection de carburant, la vanne 30 et les moyens de contrôle 34 et 44 de moyens de commande 32 et 42 des soupapes, comme explicité ci-après.
Plus précisément, ce calculateur commande en position de fermeture la vanne 30 de manière à isoler le deuxième collecteur 24b de l'alimentation 28 tout en laissant libre de toute entrave l'entrée d'air 26a du premier collecteur 24a. De même, ce calculateur commande les moyens d'injection de carburant de façon à les rendre inactifs. Il pilote également les moyens de contrôle 44 de façon à rendre les soupapes d'échappement 40 inactives. Cette fermeture de la vanne ainsi que l'inaction des moyens d'injection et des soupapes d'échappement sont maintenues tout au long du ou des cycles.
Le calculateur commande aussi les moyens de contrôle 34 de l'arbre à cames 32 de façon à obtenir, dans ce deuxième collecteur 24b, un air comprimé qui, en conséquence de sa compression, est à une température plus élevée que celle de l'air de l'alimentation 28.

Pour cela, on se réfère à la figure 2 qui illustre les lois de levée des soupapes d'admission 22a, 22b pendant un cycle de fonctionnement, dit cycle à vide, de ce moteur durant son stade de démarrage.
Pendant ce cycle où le vilebrequin réalise une rotation habituelle de deux tours ou 720° d'angle de vilebrequin, le piston suit une course descendante correspondant à la phase admission A en allant du point mort haut admission (PMHa) où le piston est le plus près de la culasse vers le point mort bas compression (PMBc) où il en est le plus éloignée. Durant cette phase, l'air contenu dans le collecteur 24a est classiquement admis dans le cylindre. Ce piston suit une course ascendante de ce PMBc vers le point mort haut détente (PMHd), ce qui correspond habituellement à la phase de compression C mais durant laquelle l'air contenu dans le cylindre est comprimé dans le collecteur 24b. Il suit ensuite une autre course descendante de ce PMHd vers le point mort bas échappement (PMBe) pour la phase traditionnellement intitulée phase de détente mais, dans le cas décrit, cette phase permet d'introduire l'air contenu dans le collecteur 24a dans le cylindre. Et enfin, une course ascendante de ce PMBe vers le PMHa, utilisée conventionnellement pour la phase d'échappement, mais durant laquelle l'air contenu dans le cylindre est comprimé dans le collecteur 24b.

Durant le stade de démarrage du moteur, le démarreur électrique 56 est alimenté et entraîne en rotation le vilebrequin 14 de façon à ce que ce moteur réalise au moins un cycle de fonctionnement à vide durant lequel les soupapes d'admission 22a, 22b et d'échappement 40 de tous les cylindres 10₁ à 10₄ suivent les lois de levée, comme illustré sur cette figure 2.

Pendant la phase d'admission A d'un des cylindres (cylindre 10₁ par exemple), la première soupape d'admission 22a suit sa séquence d'ouverture/fermeture entre le PMHa et le PMBc alors que la deuxième soupape d'admission 22b reste en position de fermeture. Durant cette séquence, de l'air extérieur provenant de l'alimentation 28 et ayant traversé le collecteur 24a est introduit par les premières tubulures 20a dans la chambre de combustion 16 du cylindre concerné au travers de cette soupape 22a jusqu'à sa fermeture.
Lors de la phase de compression C, la première soupape 22a reste en position de fermeture et la deuxième soupape d'admission 22b suit sa séquence d'ouverture/fermeture entre le PMBc et le PMHd. Tout au long de cette phase, le piston expulse l'air contenu dans la chambre de combustion au travers de la soupape d'admission 22b tout en le comprimant. Cet air comprimé est dirigé vers le collecteur d'admission 24b par les tubulures d'admission 20b où il est stocké à l'état comprimé après la fermeture de la soupape d'admission 22b. Ce deuxième collecteur sert dans ce cas de réserve d'air comprimé chaud pour la suite du fonctionnement et la deuxième tubulure d'admission sert de moyens de communication entre le cylindre et le deuxième collecteur.
Cette compression et ce stockage sont possibles par le fait que le deuxième collecteur est un volume fermé et isolé de toute communication extérieure par la vanne 30 et que le piston joue le rôle d'un piston d'un compresseur. Cet air comprimé dans le deuxième collecteur est à une température plus élevée que celle de l'entrée d'air 28, cette élévation de température résultant de la compression de l'air dans le cylindre.
Au cours de la phase de détente D entre le PMHd et le PMBe, la première soupape 22a suit à nouveau une séquence d'ouverture/fermeture en permettant d'introduire, de par le mouvement descendant du piston, dans la chambre de combustion de l'air provenant du premier collecteur 24a alors que la deuxième soupape d'admission 22b reste fermée.
Pendant la phase d'échappement E entre le PMBe et le PMHa, les soupapes d'échappement 40 restent en position de fermeture, la première soupape 22a est maintenue en position fermée et la deuxième soupape d'admission 22b suit sa séquence d'ouverture/fermeture alors que le piston a un mouvement ascendant durant cette phase. Pendant ce mouvement, l'air contenu dans le cylindre est comprimé et évacué de la chambre de combustion vers le deuxième collecteur 24b au travers de la soupape d'admission 22b. Cet air comprimé est également stocké dans ce deuxième collecteur 24b en augmentant encore plus la température et la pression de l'air contenu dans ce collecteur.

Bien entendu, la description ci-dessus se rapporte au cylindre 10₁, et il est compréhensible que les autres cylindres 10₂ à 10₄ suivent également le même fonctionnement avec le décalage angulaire habituel généré par les manetons 12 du vilebrequin 14.
Ainsi, à titre d'exemple pour le moteur décrit plus haut avec quatre cylindres, il peut se produire une configuration où par l'intermédiaire de deux cylindres, l'un en phase d'échappement E et l'autre en phase de compression C, de l'air chaud comprimé est introduit dans le second collecteur alors que pour les deux autres cylindres, en phase d'admission A pour l'un et de détente D pour l'autre, de l'air extérieur soit admis dans leurs chambres de combustion.

A titre d'exemple, un test a été effectué avec un moteur à combustion interne à quatre cylindres de 2000 cm³ de cylindrée totale avec un rapport volumétrique de 14:1 comprenant un deuxième collecteur d'admission 24b d'un volume de 2000 cm³. La pression de l'air à l'entrée 26a était de 1 bar et sa température était à 0°C. Le démarreur a été commandé de façon à ce qu'il permette de réaliser deux cycles à vide, c'est-à-dire deux fois deux tours de vilebrequin 14.

A la fin d'un premier cycle à vide, la pression de l'air dans le deuxième collecteur 24b peut être de l'ordre de 2 bars et sa température peut être de l'ordre de 40 °C.
Après l'exécution d'un deuxième cycle de fonctionnement à vide du moteur, l'air contenu dans le deuxième collecteur peut être à une température d'environ 60 °C sous une pression voisine de 3 bars.

Sur la figure 3, il est illustré une première variante avec des courbes montrant des autres lois de levée des soupapes d'admission du moteur pour réaliser la compression et le chauffage de l'air d'admission.

Comme pour l'exemple de la figure 2, le calculateur commande en position de fermeture la vanne 30 et pilote les moyens d'injection de carburant et les moyens de contrôle des soupapes d'échappement 40 de façon à les rendre inactives tout au long du ou des cycles à vide.

Dans la variante de la figure 3, le démarreur électrique 56 entraîne en rotation le vilebrequin 14 de façon à ce que ce moteur réalise au moins un cycle de fonctionnement à vide durant lequel les soupapes d'admission 22a, 22b et d'échappement 40 de tous les cylindres suivent les lois de levée, comme illustrées sur cette figure de façon à obtenir, dans le deuxième collecteur 24b, un air comprimé chaud.
Pour cela, la première soupape d'admission 22a suit sa séquence d'ouverture/fermeture entre le PMHa et le PMBc de la phase d'admission A alors que la deuxième soupape d'admission 22b reste en position de fermeture. Durant cette séquence, de l'air provenant du premier collecteur 24a est introduit dans le cylindre au travers de cette soupape 22a jusqu'à sa fermeture.

Pour la phase de compression C entre le PMBc et le PMHd, la première soupape 22a reste en position de fermeture et la deuxième soupape d'admission 22b suit sa séquence d'ouverture/fermeture. Pendant la course ascendante du piston, l'air présent dans la chambre de combustion est expulsé au travers de la soupape d'admission 22b tout en étant comprimé pour être dirigé vers le collecteur d'admission 24b où il est stocké à l'état comprimé après la fermeture de la soupape d'admission 22b.
Entre le PMHd et PMHa correspondant aux phases de détente D et d'échappement E, les deux soupapes d'admission ainsi que les soupapes d'échappement 40 sont fermées.

Bien entendu, comme pour l'exemple de la figure 2, on se trouvera également dans une configuration où, aux phases de détente et d'échappement du cylindre décrit ci-dessus, au moins un autre cylindre est en phase d'admission et de compression, ce qui permet d'admettre de l'air comprimé dans le second collecteur 24b par l'intermédiaire des moyens d'admission 18b.

Dans la variante de la figure 4 et comme déjà indiqué précédemment, le démarreur électrique 56 entraîne en rotation le vilebrequin 14 de façon à ce que ce moteur réalise au moins un cycle de fonctionnement à vide durant lequel les soupapes d'admission 22a, 22b et d'échappement 40 de tous les cylindres suivent les lois de levée, comme illustrées sur la figure 4. De plus, le calculateur commande en position de fermeture la vanne 30 et pilote les moyens d'injection de carburant et les moyens de contrôle des soupapes d'échappement 40 de façon à les rendre inactives tout au long du ou des cycles à vide.
Dans cette variante, la première soupape d'admission 22a suit sa séquence d'ouverture/fermeture entre le PMHa et le PMBc de la phase d'admission A alors que la deuxième soupape d'admission 22b reste en position de fermeture. Durant cette séquence, de l'air provenant du premier collecteur 24a est introduit dans le cylindre au travers de cette soupape 22a jusqu'à sa fermeture.
Cet air admis est ensuite comprimé en étant chauffé puis détendu dans le cylindre par le mouvement descendant du piston entre respectivement le PMBc et le PMHd (Phase C), puis entre le PMHd et le PMBe (Phase D).
Au PMBe, la première soupape 22a reste en position de fermeture et la deuxième soupape 22b est ouverte puis se referme au PMHa (Phase E) avec une course ascendante du piston. Durant cette course, l'air comprimé/détendu, durant les phases C et D ci-dessus, est à nouveau comprimé par le piston pour être ensuite admis, à l'état comprimé et chaud, dans le second collecteur 24b.
Durant les phases C et D de ce cylindre, un ou plusieurs autres cylindres sont calés pour admettre dans leurs chambres de combustion de l'air provenant du premier collecteur 24a, le comprimer, puis le diriger à l'état chaud et comprimé dans le deuxième collecteur 24b.

Ainsi, au terme du ou des cycles à vide, de l'air comprimé chaud est présent dans le deuxième collecteur 24b et de l'air extérieur peut circuler dans le premier collecteur 24a.

Bien entendu, l'homme de métier déterminera par calcul ou suite à des essais, le nombre de cycles à vide nécessaire à l'obtention d'un air à la température voulue dans le deuxième collecteur 24b. Ces résultats pourront ensuite être intégrés sous forme de cartographie dans le calculateur et permettront d'optimiser la séquence de démarrage.

Dés que la température de l'air et/ou la pression, mesurées par un ou des capteurs par exemple, dans le deuxième collecteur est atteinte, le calculateur, tout en maintenant l'alimentation électrique du démarreur pour qu'il poursuive sa rotation et en conséquence la rotation du vilebrequin, contrôle les différents cylindres de manière à faire démarrer la combustion dans au moins un cylindre alors que les autres cylindres poursuivent leurs cycles de fonctionnement à vide pour alimenter en air comprimé chaud le deuxième collecteur 24b.

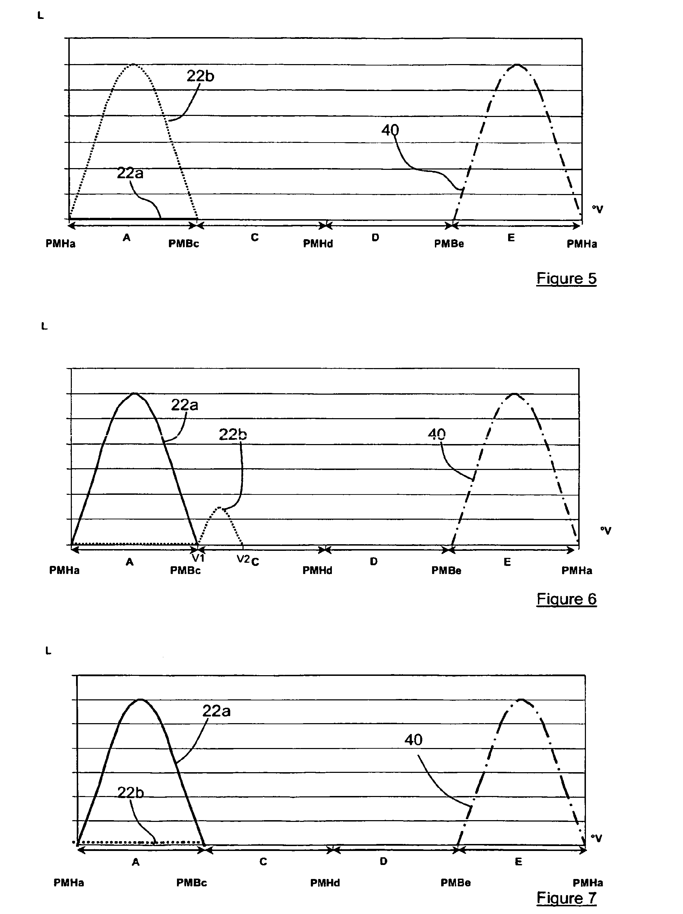

Pour cela en se référant à la figure 5, durant la phase d'admission A, la deuxième soupape d'admission 22b suit sa séquence d'ouverture/fermeture en admettant par la deuxième tubulure 20b de l'air comprimé chaud à la température souhaitée en provenance du deuxième collecteur 24b. Par cela, la tubulure d'admission 20b est utilisée en tant que moyens de communication bidirectionnelle entre le cylindre et le deuxième collecteur. Pendant cette séquence, la première soupape 22a est maintenue en position de fermeture. Cet air chaud admis est ensuite comprimé lors de la phase de compression C, puis du carburant est injecté dans la chambre de combustion au voisinage du PMHd sous le contrôle du calculateur 46. Le mélange carburé ainsi formé est enflammé par autocombustion et génère des gaz qui produisent une force sur le piston pour l'entraîner en un mouvement descendant jusqu'au PMBe en réalisant ainsi un début de démarrage du moteur. Au voisinage de ce PMBe, les soupapes d'échappement 40 de ce cylindre s'ouvrent pour libérer les gaz d'échappement contenus dans ce cylindre et les évacuer vers une ligne d'échappement que comporte habituellement le moteur. A la fin de la phase d'échappement E, ces soupapes d'échappement 40 se referment et le cycle recommence à partir du PMHa.

Dans la variante de la figure 6, de l'air extérieur provenant du premier collecteur 24a et de l'air chaud contenu dans le deuxième collecteur 24b sont introduits dans le cylindre où doit se produire la combustion du mélange carburé.
A titre d'exemple, la première soupape 22a suit sa loi conventionnelle de levée entre le PMHa et le PMBc de la phase d'admission A en admettant dans le cylindre de l'air extérieur provenant du premier collecteur 24a. Après cette phase A, la deuxième soupape d'admission 22b s'ouvre à un angle V1 et se referme à l'angle V2 bien avant le PMHd. De par ces différentes séquences des deux soupapes d'admission, il est admis un mélange d'air extérieur et d'air chaud dans le cylindre, mélange d'airs qui est ensuite comprimé lors de la phase C.

Le cycle de fonctionnement du moteur se poursuit avec l'injection du carburant, la détente du mélange carburé suite à sa combustion et l'évacuation des gaz d'échappement pendant la phase E.
Comme la pression dans le collecteur 24b est supérieure à celle du collecteur 24a, il est possible de faire suivre une séquence d'ouverture/fermeture à la soupape 22b après la fermeture de la soupape 22a. Ceci permet d'éviter un risque de vidange de l'air contenu dans le collecteur 24b dans le collecteur 24a si les deux soupapes sont ouvertes simultanément.
L'ouverture de la soupape 22b après la fermeture de la soupape 22a, permet de bénéficier d'un air plus chaud qui est à une pression plus élevée que la pression atmosphérique.

La quantité respective d'air extérieur et d'air chaud, et par conséquent la température de ce mélange d'airs, est avantageusement choisi en modulant la levée et/ou en variant le moment d'ouverture et/ou de fermeture de l'une et/ou l'autre soupape d'admission.

Dès que la combustion dans le cylindre est commencée, le calculateur peut commander l'arrêt de l'alimentation du démarreur électrique 56 de manière à stopper sa rotation, et le vilebrequin 14 est alors entraîné en rotation par l'intermédiaire de l'ensemble bielle-piston du cylindre dans lequel se produit cette combustion, si celle-ci suffit à entraîner le vilebrequin. Dans le cas contraire, l'alimentation du démarreur est maintenue jusqu'à ce qu'un cylindre supplémentaire fonctionne avec une combustion du mélange carburé. Par la suite, la possibilité de couper l'alimentation du démarreur est à nouveau évaluée, si cette nouvelle configuration suffit à entraîner le vilebrequin.

De même l'homme du métier déterminera par calcul ou par des essais le nombre de cycle de fonctionnement selon la figure 5 ou la figure 6 pour obtenir la combustion souhaitée et le dégagement d'énergie nécessaire dans le cylindre concerné.

Dès que la combustion dans ce cylindre dégage suffisamment de calories pour maintenir une température sensiblement constante dans la chambre de combustion, généralement après quelques cycles de fonctionnement, le calculateur pilote les soupapes pour que le cylindre fonctionne avec les lois de levée illustrées sur la figure 7.

Comme illustré sur cette figure 7, la première soupape d'admission 22a suit une séquence d'ouverture/fermeture entre le PMHa et le PMBc alors que la deuxième soupape 22b est en position de fermeture. De l'air extérieur provenant du premier collecteur 24a est introduit dans la chambre de combustion de ce cylindre. Cet air extérieur est ensuite comprimé lors de la phase de compression C, puis du carburant est injecté dans la chambre de combustion au voisinage du PMHd en formant un mélange carburé. La suite du processus de PMHd à PMHa sera identique à celui de la figure 5 ou 6 avec une phase de détente et d'échappement.

Ainsi, à ce niveau du stade de démarrage, successivement ou non, chaque cylindre suivra un fonctionnement avec les lois de levée des figures 2, 3 ou 4 pour la compression et l'élévation en température de l'air extérieur admis sans générer de combustion d'un mélange carburé, puis suivra le fonctionnement avec les lois de levée des figures 5 ou 6 pour l'admission d'un air comprimé chaud avec combustion d'un mélange carburé et ensuite un fonctionnement pour une admission d'un air extérieur avec combustion d'un mélange carburé selon les lois de levée de la figure 7.

Il est à noter que, pendant le stade du démarrage du moteur, chacun des cylindres répondra aux successions des lois de levée comme indiqué ci-dessus pour arriver à une configuration terminale où tous les cylindres suivront les lois de levée de la figure 7.

Avant d'arriver à cette configuration terminale, il peut se produire une configuration où au moins un cylindre suivra les lois de levée des figures 2, 3 ou 4, au moins un autre cylindre répondra au déroulement des séquences des soupapes illustrées aux figures 5 ou 6 et enfin au moins un cylindre correspondra aux lois de levée de la figure 7.

En final, dès que tous les cylindres 10₁ à 10₄ ont des fonctionnements de leurs soupapes qui correspondent aux lois de levée illustrées sur la figure 7, le calculateur 46 pilote la vanne 30 pour la placer en position de pleine ouverture de l'entrée 26b et de l'air extérieur peut circuler entre l'alimentation 28 et le deuxième collecteur 24b.

Par la suite, le calculateur 46 contrôle les moyens de commande 34 et 44 des arbres à cames 32 et 42 pour que les soupapes 22a, 22b et 40 suivent des lois de levée conventionnelles.

En conséquence, les deux soupapes d'admission 22a et 22b sont conjointement ouvertes au voisinage du PMHa de la phase A en admettant dans le cylindre de l'air extérieur provenant du premier et du deuxième collecteurs et se referment quasiment simultanément au voisinage du PMBc.

Comme cela est largement connu, cet air admis est ensuite comprimé durant la phase C puis mélangé avec du carburant pour produire une combustion de ce mélange carburé tout au long de la phase D qui est suivie d'une phase d'échappement E.

Grâce à l'invention, il est possible d'augmenter non seulement la pression de l'air introduit dans les chambre de combustion, ce qui ne peut qu'accroître la puissance du moteur lors de son démarrage mais également de favoriser la combustion de par la forte température de l'air contenu dans le cylindre.

La présente invention n'est pas limitée à l'exemple décrit mais englobe toutes variantes et tous équivalents.

## Revendications

1. Procédé pour démarrer un moteur à combustion interne fonctionnant selon un cycle avec une phase d'admission, de compression, de détente et d'échappement, et comportant au moins deux cylindres (10₁ - 10₄) avec une chambre de combustion (16), des moyens d'admission d'air (18a, 18b), des moyens d'échappement (36) et des moyens d'injection de carburant dans ladite chambre, **caractérisé en ce qu'**il consiste :
- à réaliser au moins un cycle de fonctionnement du moteur sous l'impulsion d'un dispositif de démarrage (56) tout en interdisant l'introduction de carburant dans tous les cylindres et en rendant inactifs les moyens d'échappement,
- à comprimer et à chauffer de l'air par l'intermédiaire desdits cylindres pendant ledit au moins un cycle de fonctionnement du moteur,
- à entreposer cet air comprimé chaud dans des moyens de stockage extérieurs aux cylindres,
- à admettre cet air comprimé chaud dans au moins un desdits cylindres et à y introduire du carburant en réalisant un mélange air comprimé chaud/carburant de façon à effectuer un début de démarrage du moteur par la combustion dudit mélange carburé.

2. Procédé pour démarrer un moteur à combustion interne selon la revendication 1, **caractérisé en ce qu'**il consiste, après le début de démarrage du moteur, à arrêter le dispositif de démarrage (56) et à admettre de l'air ainsi que du carburant dans ledit au moins un desdits cylindres pour réaliser un mélange air/carburant et la combustion de ce mélange dans ledit cylindre.

3. Procédé pour démarrer un moteur à combustion interne selon la revendication 1, **caractérisé en ce qu'**il consiste, pendant qu'au moins un desdits cylindres admet de l'air comprimé chaud, à poursuivre la compression et le chauffage de l'air par l'intermédiaire d'au moins un autre desdits cylindres ainsi que le stockage de l'air comprimé chaud.

4. Procédé pour démarrer un moteur à combustion interne selon la revendication 1 ou 2, **caractérisé en ce qu'**il consiste, pendant qu'au moins un desdits cylindres admet de l'air après le début de démarrage, à poursuivre la compression et le chauffage de l'air par l'intermédiaire d'au moins un autre desdits cylindres ainsi que le stockage de l'air comprimé chaud.

5. Procédé pour démarrer un moteur à combustion interne selon la revendication 1 ou 2, **caractérisé en ce qu'**il consiste, pendant qu'au moins un desdits cylindres admet de l'air après le début de démarrage, à admettre de l'air comprimé chaud dans au moins un autre desdits cylindres et à y autoriser l'introduction du carburant pour réaliser un mélange carburé.

6. Procédé pour démarrer un moteur à combustion interne selon l'une des revendications précédentes, **caractérisé en ce qu'**il consiste, pour réaliser la compression et le chauffage de l'air, à admettre cet air pendant la phase d'admission et de détente d'au moins un desdits cylindres, et à comprimer et chauffer cet air lors de sa phase de compression et d'échappement.

7. Procédé pour démarrer un moteur à combustion interne selon l'une des revendications 1 à 5, **caractérisé en ce qu'**il consiste, pour réaliser la compression et le chauffage de l'air, à admettre cet air pendant la phase d'admission d'au moins un desdits cylindres, et à comprimer et chauffer cet air lors de sa phase de compression.

8. Procédé pour démarrer un moteur à combustion interne selon l'une des revendications 1 à 5, **caractérisé en ce qu'**il consiste, pour réaliser la compression et le chauffage de l'air, à admettre cet air pendant la phase d'admission d'au moins un desdits cylindres, et à comprimer et chauffer cet air lors de sa phase d'échappement.

9. Procédé pour démarrer un moteur à combustion interne selon la revendication 1, **caractérisé en ce qu'**il consiste, pendant qu'au moins un desdits cylindres admet de l'air comprimé chaud, à admettre de l'air dans ce cylindre pour obtenir un mélange d'air et d'air chaud comprimé dans lequel est introduit du carburant.

10. Moteur à combustion interne, comportant au moins deux cylindres (10₁ - 10₄) comprenant une chambre de combustion (16) avec au moins un moyen d'admission d'air (18a, 18b) et des moyens d'injection de carburant et mettant en oeuvre le procédé selon l'une quelconque des revendications 1 à 9, **caractérisé en ce qu'**il comprend des moyens de stockage extérieurs aux cylindres de l'air comprimé par l'un au moins des cylindres.

11. Moteur à combustion interne selon la revendication 10, comprenant au moins deux moyens d'admission (18a, 18b) avec chacun une tubulure d'admission (20a, 20b) contrôlée par une soupape d'admission (22a, 22b), **caractérisé en ce qu'**il comprend un premier collecteur d'admission en communication avec les cylindres par l'un (18a) des moyens d'admission en étant connecté à une entrée d'air (26a) et un deuxième collecteur d'admission (24b) en communication avec les cylindres par l'autre (18b) des deux moyens d'admission en étant connecté par une autre entrée d'air (26b) contrôlée par un moyen de vannage (30).

12. Moteur à combustion interne selon la revendication 10, **caractérisé en ce que** les moyens de stockage comprennent le deuxième collecteur d'admission (24b) dont l'entrée d'air (26b) est fermée par le moyen de vannage (30).

## Claims

1. Process for starting an internal combustion engine operating in a cycle with an induction, a compression, an expansion and an exhaust phase, and comprising at least two cylinders (10₁ - 10₄) with a combustion chamber (16), air admission means (18a, 18b), exhaust means (36) and means for injecting fuel into said chamber, **characterised in that** it consists in:
- performing at least one operating cycle of the engine under the impulse of a starting device (56) while preventing the introduction of fuel into all the cylinders and rendering the exhaust means inactive,
- compressing and heating air by means of said cylinders during said at least one operating cycle of the engine,
- storing this hot compressed air in storage means external to the cylinders,
- admitting this hot compressed air into at least one of said cylinders and introducing fuel therein, to achieve a hot compressed air/fuel mixture so as to initiate starting of the engine by combustion of said carburetted mixture.

2. Process for starting an internal combustion engine in accordance with claim 1, **characterised in that** it consists, after initiating starting of the engine, in stopping the starting device (56) and admitting air together with fuel into said at least one of said cylinders to achieve an air/fuel mixture and combustion of this mixture in said cylinder.

3. Process for starting an internal combustion engine in accordance with claim 1, **characterised in that** it consists, while at least one of said cylinders is admitting hot compressed air, in continuing the compression and heating of the air by means of at least one other of said cylinders as well as the storage of the hot compressed air.

4. Process for starting an internal combustion engine in accordance with claim 1 or 2, **characterised in that** it consists, while at least one of said cylinders is admitting air after initiating starting, in continuing the compression and heating of the air by means of at least one other of said cylinders as well as the storage of the hot compressed air.

5. Process for starting an internal combustion engine in accordance with claim 1 or 2, **characterised in that** it consists, while at least one of said cylinders is admitting air after initiating starting, in admitting hot compressed air into at least one other of said cylinders and allowing introduction of the fuel therein to achieve a carburetted mixture.

6. Process for starting an internal combustion engine in accordance with one of the preceding claims, **characterised in that** it consists, to achieve the compression and heating of the air, in admitting this air during the induction and the expansion phase of at least one of said cylinders, and in compressing and heating this air during its compression and its exhaust phase.

7. Process for starting an internal combustion engine in accordance with one of claims 1 to 5, **characterised in that** it consists, to achieve the compression and heating of the air, in admitting this air during the induction phase of at least one of said cylinders, and in compressing and heating this air during its compression phase.

8. Process for starting an internal combustion engine in accordance with one of claims 1 to 5, **characterised in that** it consists, to achieve the compression and heating of the air, in admitting this air during the induction phase of at least one of said cylinders, and in compressing and heating this air during its exhaust phase.

9. Process for starting an internal combustion engine in accordance with claim 1, **characterised in that** it consists, while at least one of said cylinders is admitting hot compressed air, in admitting air into this cylinder to obtain a mixture of air and hot compressed air into which fuel is introduced.

10. Internal combustion engine, comprising at least two cylinders (10₁ - 10₄) including a combustion chamber (16) with at least one air admission means (18a, 18b) and fuel injection means and implementing the process in accordance with any one of claims 1 to 9, **characterised in that** it includes storage means external to the cylinders for the air compressed by at least one of the cylinders.

11. Internal combustion engine in accordance with claim 10, including at least two admission means (18a, 18b) each with an admission pipe (20a, 20b) controlled by an admission valve (22a, 22b), **characterised in that** it includes a first induction manifold in communication with the cylinders through one (18a) of the admission means while being connected to an air intake (26a) and a second induction manifold (24b) in communication with the cylinders through the other (18b) of the two admission means while being connected to another air intake (26b) controlled by a valving means (30).

12. Internal combustion engine in accordance with claim 10, **characterised in that** the storage means include the second induction manifold (24b) the air intake (26b) of which is closed by the valving means (30).

## Patentansprüche

1. Verfahren zum Anlassen einer Brennkraftmaschine, die einem Zyklus mit einer Einlass-, Verdichtungs-, Entspannungs- und Auslassphase gemäß betrieben wird, und umfassend mindestens zwei Zylinder (10₁ - 10₄) mit einem Brennraum (16), Lufteinlassmitteln (18a, 18b), Auslassmitteln (36) und Mitteln zum Einspritzen von Kraftstoff in diesen Brennraum, **dadurch gekennzeichnet, dass** es darin besteht:
- mindestens einen Betriebszyklus der Maschine unter dem Impuls einer Anlassvorrichtung (56) durchzuführen, wobei die Einleitung von Kraftstoff in alle Zylinder untersagt wird und die Auslassmittel deaktiviert sind,
- während dieses mindestens einen Betriebszyklus der Maschine Luft durch diese Zylinder zu verdichten und zu erwärmen,
- diese warme verdichtete Luft in außerhalb der Zylinder gelegene Speichermittel zu speichern,
- diese warme verdichtete Luft in mindestens einen Zylinder einzulassen und Kraftstoff darin einzuleiten, wodurch ein Gemisch aus warmer verdichteter Luft und Kraftstoff hergestellt wird, um das Anlassen der Maschine durch Verbrennung dieses Kraftstoff-Luft-Gemischs einzuleiten.

2. Verfahren zum Anlassen einer Brennkraftmaschine nach Anspruch 1, **dadurch gekennzeichnet, dass** es darin besteht, nach dem Beginn des Anlassens der Maschine die Anlassvorrichtung (56) zu stoppen und Luft sowie Kraftstoff in mindestens einen der Zylinder einzulassen, um ein Kraftstoff-Luft-Gemisch herzustellen und die Verbrennung dieses Gemischs im Zylinder zu durchzuführen.

3. Verfahren zum Anlassen einer Brennkraftmaschine nach Anspruch 1, **dadurch gekennzeichnet, dass** es darin besteht, die Verdichtung und die Erwärmung der Luft durch mindestens einen anderen der Zylinder sowie die Speicherung der erwärmten verdichteten Luft fortzusetzen, während mindestens einer der Zylinder warme verdichtete Luft einlässt.

4. Verfahren zum Anlassen einer Brennkraftmaschine nach Anspruch 1 oder 2, **dadurch gekennzeichnet, dass** es darin besteht, die Verdichtung und die Erwärmung der Luft durch mindestens einen anderen der Zylinder sowie die Speicherung der erwärmten verdichteten Luft fortzusetzen, während mindestens einer der Zylinder nach dem Beginn des Anlassens Luft einlässt.

5. Verfahren zum Anlassen einer Brennkraftmaschine nach Anspruch 1 oder 2, **dadurch gekennzeichnet, dass** es darin besteht, warme verdichtete Luft in mindestens einen anderen der Zylinder einzulassen und die Einleitung des Kraftstoffs zuzulassen, um ein Kraftstoff-Luft-Gemisch herzustellen, während mindestens einer der Zylinder nach dem Beginn des Anlassens Luft einlässt.

6. Verfahren zum Anlassen einer Brennkraftmaschine nach einem der vorherigen Ansprüche, **dadurch gekennzeichnet, dass** es darin besteht, zur Durchführung der Verdichtung und der Erwärmung der Luft diese Luft während der Einlass- und Entspannungsphase mindestens eines der Zylinder einzulassen und diese Luft während seiner Verdichtungs- und Auslassphase zu verdichten und zu erwärmen.

7. Verfahren zum Anlassen einer Brennkraftmaschine nach einem der Ansprüche 1 bis 5, **dadurch gekennzeichnet, dass** es darin besteht, zur Durchführung der Verdichtung und der Erwärmung der Luft diese Luft während der Einlassphase mindestens eines der Zylinder einzulassen und diese Luft während seiner Verdichtungsphase zu verdichten und zu erwärmen.

8. Verfahren zum Anlassen einer Brennkraftmaschine nach einem der Ansprüche 1 bis 5, **dadurch gekennzeichnet, dass** es darin besteht, zur Durchführung der Verdichtung und der Erwärmung der Luft diese Luft während der Einlassphase mindestens eines der Zylinder einzulassen und diese Luft während seiner Auslassphase zu verdichten und zu erwärmen.

9. Verfahren zum Anlassen einer Brennkraftmaschine nach Anspruch 1, **dadurch gekennzeichnet, dass** es darin besteht, während mindestens einer der Zylinder warme verdichte Luft einlässt, Luft in diesen Zylinder einzulassen, um ein Gemisch aus Luft und warmer verdichteter Luft zu erhalten, in welches Kraftstoff eingeleitet wird.

10. Brennkraftmaschine, umfassend mindestens zwei Zylinder (10₁ - 10₄), umfassend einen Brennraum (16) mit mindestens einem Lufteinlassmittel (18a, 18b) und Kraftstoffeinspritzmitteln, um das Verfahren nach einem der Ansprüche 1 bis 9 durchzuführen, **dadurch gekennzeichnet, dass** es außerhalb der Zylinder gelegene Speichermittel für Luft umfasst, die durch mindestens einen der Zylinder verdichtet wird.

11. Brennkraftmaschine nach Anspruch 10, umfassend mindestens zwei Einlassmittel (18a, 18b), jedes mit einem Ansaugrohr (20a, 20b), das durch ein Einlassventil (22a, 22b) gesteuert wird, **dadurch gekennzeichnet, dass** sie einen ersten Ansaugstutzen umfasst, der durch eines (18a) der Einlassmittel mit den Zylindern in Verbindung steht, wobei er mit einem Lufteinlass (26a) verbunden ist, und einen zweiten Ansaugstutzen (24b), der durch das andere (18b) der zwei Einlassmittel mit den Zylindern in Verbindung steht, wobei er mit einem anderen Lufteinlass (26b) verbunden ist, der durch ein Ventilmittel (30) gesteuert wird.

12. Brennkraftmaschine nach Anspruch 10, **dadurch gekennzeichnet, dass** die Speichermittel einen zweiten Ansaugstutzen (24b) umfassen, dessen Lufteinlass (26b) durch das Ventilmittel (30) geschlossen wird.
